**Europäisches Patentamt**

**European Patent Office**

**Office européen des brevets**

(19)

(11) Veröffentlichungsnummer: **0 058 390**
**B1**

(12) # EUROPÄISCHE PATENTSCHRIFT

(45) Veröffentlichungstag der Patentschrift:
**27.01.88**

(51) Int. Cl.⁴: **G 01 L 23/22**, F 02 P 5/04

(21) Anmeldenummer: **82101003.0**

(22) Anmeldetag: **11.02.82**

(54) Verfahren zum Erkennen klopfender Verbrennung sowie Vorrichtung zur Durchführung des Verfahrens.

(30) Priorität: **13.02.81 DE 3105245**
**06.03.81 DE 3108460**

(43) Veröffentlichungstag der Anmeldung:
**25.08.82 Patentblatt 82/34**

(45) Bekanntmachung des Hinweises auf die Patenterteilung:
**27.01.88 Patentblatt 88/4**

(84) Benannte Vertragsstaaten:
**AT DE FR GB IT NL SE**

(56) Entgegenhaltungen:
**DE - A - 2 917 213**
**DE - A - 3 001 711**
**US - A - 2 841 979**
**US - A - 4 163 385**

(73) Patentinhaber: **Pischinger, Franz, Prof. Dr. techn., Im Erkfeld 4, D-5100 Aachen (DE)**

(72) Erfinder: **Laurenz, Werner, Dipl.-Ing., Herzogstrasse 15, D-5100 Aachen (DE)**

(74) Vertreter: **Fischer, Friedrich B., Dr.-Ing., c/o Klöckner-Humboldt-Deutz AG Patentabteilung-AE-ZP Deutz-Mülheimer-Strasse 111, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Erkennung klopfender Verbrennung nach dem Oberbegriff des Anspruchs 1 bzw. 2 sowie auf eine Vorrichtung zur Durchführung des Verfahrens nach dem Oberbegriff des Anspruchs 5 bzw. 6.

Der effektive Wirkungsgrad von fremdgezündeten Brennkraftmaschinen ist in starkem Masse von der Höhe ihres Verdichtungsverhältnisses abhängig. Generell kann gesagt werden, dass eine Anhebung des Verdichtungsverhältnisses um mehrere Einheiten, ausgehend von Werten heutiger Serienbrennkraftmaschinen, insbesondere im Teillastbereich zu erheblich niedrigeren Brennstoffverbräuchen führt. Begrenzt wird diese Erhöhung durch das Auftreten von klopfendem Motorbetrieb bei hoher Last.

In der Motortechnik wird als «Klopfen» eine abnorme Verbrennungserscheinung bezeichnet, die ihre Ursache in einem gegenüber der normalen ottomotorischen Verbrennung ausserordentlich schnellen Gemischumsatz hat und gegen Ende der Verbrennungsphase auftritt.

Betreibt man eine Brennkraftmaschine im bereich klopfender Verbrennung, so kann es zu Schädigungen des Triebwerkes kommen. Um einen einwandfreien Betrieb zu gewährleisten, muss insbesondere wegen unterschiedlicher Brennstoffqualitäten und wegen Serienstreuungen des Verdichtungsverhältnisses und der Zündanlage usw. bei der Zündung ein definierter, grösserer Abstand von der Klopfgrenze eingestellt werden.

Ein Verfahren nach dem Oberbegriff des Anspruchs 1 bzw. 2 sowie eine Vorrichtung zur Durchführung dieses Verfahrens ist aus der US-A-2 841 979 bekannt. Im Brennraum der Brennkraftmaschine ist ein optischer Sensor angeordnet, der die auftretende Strahlung optisch erfasst und an einen Wandler (Fotozelle) weiterleitet, dessen elektrisches Ausgangssignal einer Verarbeitungseinrichtung zugeführt wird. Diese macht das Frequenzspektrum der erfassten Strahlung sichtbar, so dass ein Betrachter eine klopfende Verbrennung von einer nicht klopfenden Verbrennung unterscheiden kann. Ob und in welcher Weise der Betrachter steuernd in die Brennkraftmaschine eingreift und wann dieses zu erfolgen hat, liegt im Ermessen des Betrachters.

Aus der US-A-4 163 385 ist bekannt, mittels eines Druckaufnehmers den Druckverlauf im Brennraum zu erfassen und in Abhängigkeit der erfassten Werte steuernd in die Brennkraftmaschine einzugreifen. Ein derart arbeitendes Verfahren erfordert jedoch einen hohen Aufwand bei der Messwerterfassung, -übertragung und -auswertung und ist dennoch den im rauhen Alltagsbetrieb auftretenden mechanischen Belastungen nicht gewachsen. Druckaufnehmer haben ferner systembedingt eine hohe Eigenträgheit bei der Erfassung der Klopfsignale, so dass eine rasche und hochgenaue Steuerung an der Klopfgrenze nicht möglich ist.

Aus der DE-A-2 917 213 ist eine Einrichtung zur Erfassung der beim Klopfen einer Brennkraftmaschine auftretenden Schwingungen mit Hilfe am Motorblock angeordneter Schwingungsmesser bekannt. Hierbei werden die während des klopfenden Betriebs auftretenden Schwingungen erfasst und ausgewertet. Die Messwertaufnehmer sind zwar relativ kostengünstig, jedoch ist es schwierig, ihre Messsignale wegen der geringen Rauschabstände, die zudem noch von der Drehzahl der Brennkraftmaschine abhängig sind, auszuwerten. Weiterhin müssen mögliche Störungen, die beispielsweise durch das Ventilschliessen oder die Zündung bedingt sind, mit Hilfe geeigneter Auswerteverfahren unterdrückt werden. Ferner ist eine für jeden Zylinder getrennte Beurteilung über einen Sensor und eine Auswerteelektronik nur ausserordentlich schwer durchführbar, so dass die Kosten für eine derartige Einrichtung mit der Anzahl der Zylinder steigen.

Weiterhin ist es bekannt (DE-A-2 932 193), die Flammenlaufzeit im Brennraum zu bestimmen. Hierzu werden Ionisationssonden verwendet, von denen immer zwei pro Zylinder vorgesehen werden müssen, um die Flammenausbreitungsgeschwindigkeit zu erfassen. Hierbei ist es von Nachteil, dass für jeden Motorbetriebspunkt bei normalem Betrieb die Kenntnis der Laufzeiten notwendig ist, die nur in umfangreichen Prüfstandsuntersuchungen ermittelt werden können. Aufgrund der nicht zu verhindernden Fertigungstoleranzen können deshalb bei Verwendung eines derartigen Messverfahrens bei unterschiedlichen Brennkraftmaschinen oder auch bei Brennkraftmaschinen gleicher Produktionsreihen Fehldeutungen der Sensorsignale auftreten.

Der Erfindung liegt die Aufgabe zugrunde, ein Verfahren und eine Vorrichtung zum Erkennen klopfender Verbrennung während des Betriebs einer fremdgezündeten Brennkraftmaschine anzugeben, mit dem durch Steuerung von Betriebsparametern der Brennkraftmaschine in die Betriebsbedingungen des Motors eingegriffen werden kann, um anhand der erkannten klopfenden Verbrennung die Steuerung der Brennkraftmaschine zu einem Betriebspunkt ohne klopfende Verbrennung hinzuführen.

Diese Aufgabe wird erfindungsgemäss durch die kennzeichnenden Merkmale des Anspruchs 1 bzw. 2 gelöst. Eine Vorrichtung zur Durchführung des Verfahrens ist im Anspruch 5 bzw. 6 angegeben.

Bei dem erfindungsgemässen Verfahren beinhaltet die sich bei klopfender Verbrennung ändernde Strahlung der Brennraumgase keine die Auswertung störenden Signale. Die Strahlungssignale lassen sich frei von elektrischen und mechanischen Störungen übertragen. Aufgrund des hohen Signalrauschabstands ist eine eindeutige Erkennung des klopfenden Betriebs sichergestellt. Mit dem erfindungsgemässen Verfahren wird die Strahlung pro Zylinder erfasst und je Arbeitsspiel die Klopfsignalenergie ermittelt. Über eine definierte Arbeitsspielanzahl werden die Klopfsignalenergien gemittelt oder ihr Spitzenwert bestimmt. Die erhaltenen Werte werden mit einem Referenzwert verglichen und in Abhängigkeit des Vergleichs steuernd in die Brennkraftmaschine derart eingegriffen, dass der klopfende Betrieb vermieden wird. Dabei werden Einstellparameter wie z.B. Einspritzmenge, Gemischaufbereitung, Zündzeitpunkt und Ladedruck einzeln oder gemeinsam geändert. Eine derartige Auswertung der Signale und Steuerung der Brennkraftmaschine lässt sich leicht und kostengünstig durchführen.

In der Lösung der Aufgabe nach Anspruch 2 ist vorgesehen, jede pro Arbeitsspiel ermittelte Klopfsignalenergie mit einem vorgegebenen Referenzwert zu vergleichen und bei Überschreiten des Referenzwertes einen Zähler um eine Einheit zu erhöhen. Der momentane Zählerstand bezogen auf die Gesamtzahl der Vergleiche bzw. Arbeitsspiele stellt die IST-Grösse der relativen Häufigkeit der klopfenden Arbeitsspiele dar und dient zum steuernden Eingriff an der Brennkraftmaschine.

Bei mehrzylindrigen Brennkraftmaschinen besitzt aufgrund von Fertigungstoleranzen jeder Zylinder ein anderes Verdichtungsverhältnis; auch kann die Füllung jedes Zylinders unterschiedlich sein. Daher ist vorgesehen, in jedem Zylinder die Strahlung zu erfassen und zu einer gemeinsamen Verarbeitungseinrichtung zu leiten, in der in Abhängigkeit von der Zeitfolge der eingehenden Strahlungssignale eine für jeden Zylinder individuelle Bewertung vorgenommen wird. Anhand dieser individuellen Bewertung kann jeder Zylinder der Brennkraftmaschine an seiner Klopfgrenze betrieben werden.

Eine Vorrichtung zur Durchführung des jeweiligen Verfahrens ist in den Ansprüchen 5 bzw. 6 angegeben.

Bei einer Verarbeitung der Signale in nur einer Verarbeitungseinrichtung nach Anspruch 7 kann der apparative und elektrische Aufwand der Vorrichtung erheblich gesenkt werden, ohne Nachteile bei der Erfassung der Signale oder Steuerung der Brennkraftmaschine in Kauf nehmen zu müssen.

Im folgenden wird die Erfindung anhand eines bevorzugten Ausführungsbeispiels und Zeichnungen näher erläutert:

Es stellen dar:

Fig. 1 eine Schemaskizze des erfindungsgemässen Klopfsensors, eingebaut in eine Zündkerze;

Fig. 2 eine Schemaskizze der Zusammenführung der Übertragungsvorrichtungen innerhalb eines Zündverteilerdeckels;

Fig. 3 Ausgangssignale aus einem Photovervielfacher bei klopfendem Motorbetrieb;

Fig. 4 Frequenzanalyse des Ausgangssignals aus einem Photovervielfacher bei klopffreiem Betrieb;

Fig. 5 Frequenzanalyse des Ausgangssignals aus einem Photovervielfacher bei klopfendem Betrieb;

Fig. 6 Blockschaltbilder vom möglichen Aufbau der Verarbeitungslogik.

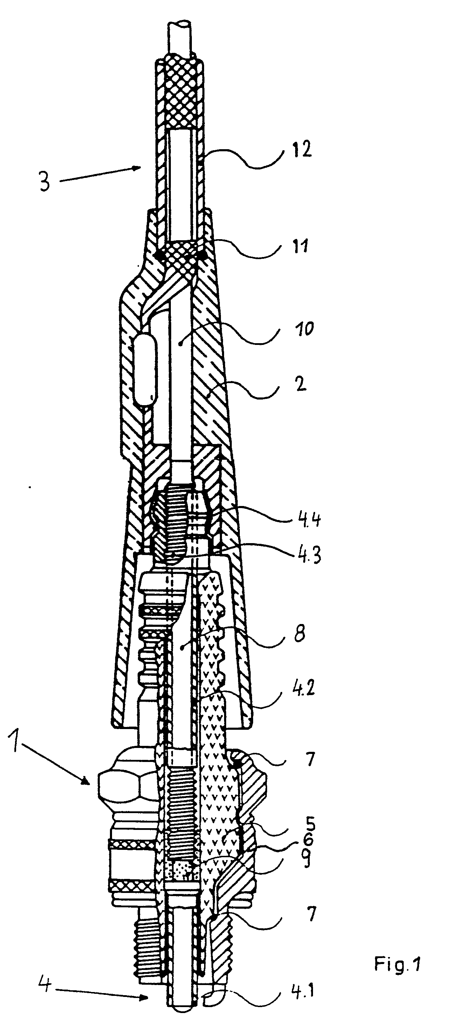

In Fig. 1 ist ein Querschnitt durch eine Zündkerze 1, mit einem aufgesteckten Zündkerzenstecker 2 und einem daran angeschlossenen Zündkabel 3 dargestellt. Die Zündkerze 1 besteht aus einer Mittelelektrode 4, einem Isolator 5, einem Gehäuse und Dichtringen 7, wobei die letzteren drei in ihrer Form und Abmessungen denen handelsüblicher Zündkerzen entsprechen.

Die Mittelelektrode ist zur Aufnahme des Klopfsensors 8 als Hülsenkonstruktion aufgebaut und besteht aus einem unteren, in den Brennraum ragenden Teil 4.1, in deren axialen Verlängerung mit Abstand der obere Teil 4.2 folgt, dessen die Zündkerze verlassendes Ende in bekannter Weise mit einem Gewinde zur Aufnahme einer Zwischenhülse 4.3 versehen ist. An der Zwischenhülse 4.3 ist über eine an sich bekannte Klemmverbindung 4.4 der Kerzenstecker 2 befestigt.

Der Klopfsensor 8 besteht aus einem hochtemperaturbeständigen Querglasstab, der einstückig in den Mittelelektrodenteilen angeordnet ist und mit seinem brennraumseitigen Ende als Kuppel über dem Mittelelektrodenteil 4.1 hinausragt. Das andere Ende des Klopfsensors ragt – plan geschliffen – aus dem oberen Ende der Mittelelektrode hinaus. Aufgrund des die Mittelelektrode überragenden Endes des Klopfsensors 8 ist die Masseelektrode als Seitenelektrode ausgeführt.

Spannungen wegen unterschiedlicher Ausdehnungen von Quarzglas und Chromstahl, aus dem die Mittelelektrode gebildet ist, werden durch die Hülsenkonstruktion des Elektrodenteils 4.1 verhindert.

Um die beiden Teile der Mittelelektrode 4 sowie den Klopfsensor 8 unverrückbar in der Zündkerze bzw. in dem Isolator 5 zu befestigen, sowie um eine Abdichtung des Brennraums zu erzielen, ist in dem Abstand zwischen dem unteren Elektrodenteil 4.1 und dem oberen Elektrodenteil 4.2 eine elektrisch leitende Spezialschmelze 9 vorgesehen.

Der Zündkerzenstecker 2 übernimmt gleichzeitig die Funktion einer Ankupplung der innerhalb des Zündkabels verlegten Übertragungsvorrichtung 10 an den Klopfsensor 8. In diesem Beispiel besteht die Übertragungsvorrichtung 10 ebenfalls aus Lichtleitfasern. Aufgrund der Temperaturen braucht jedoch kein Quarzglasstab vorgesehen zu werden. Die Übertragungsvorrichtung verlässt den Kerzenstecker mit dem Zündkabel 3. Sie ist deshalb vorteilhafterweise innerhalb des Zündkabels 3 angeordnet und wird von dem Zündstromkabel 11 ummantelt, welches in an sich bekannter Weise von einer Gummischicht 12 umschlossen ist.

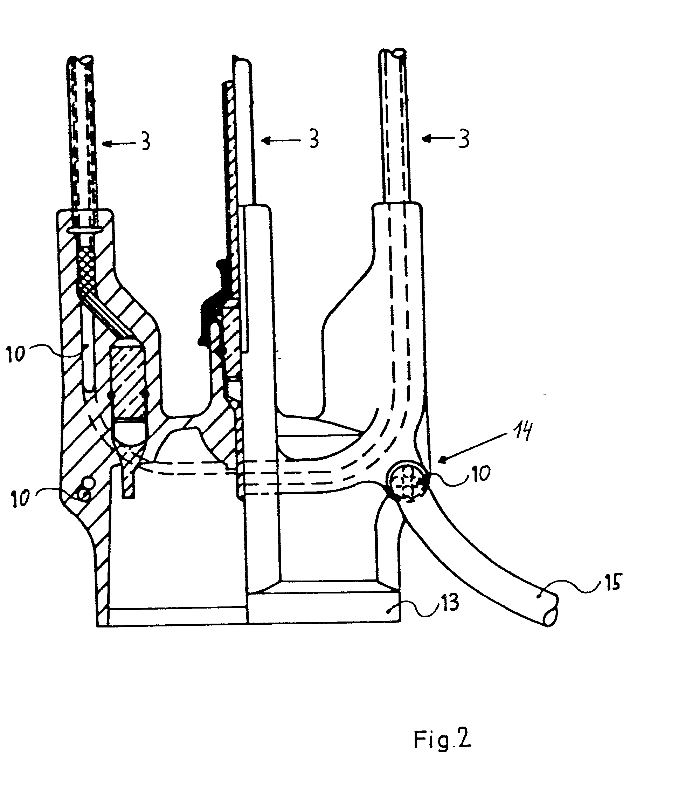

In Fig. 2 ist mit 13 ein Zündverteilerdeckel bezeichnet, auf den in an sich bekannter Weise alle Zündkabel 3 von den verschiedenen Zylindern zusammengeführt werden. Da innerhalb der Zündkabel 3 die Übertragungsvorrichtung 10 angeordnet ist, ist der Verteilerdeckel derart ausgebildet, dass ebenfalls in ihm eine Zusammenlegung der Übertragungsvorrichtungen 10 erfolgt. Hierzu werden die einzelnen Übertragungsvorrichtungen 10 an einer geeigneten Stelle 14 ge-

bündelt und gesammelt. An dieser Sammelstelle 14 ist eine weitere Übertragungsvorrichtung 15 angekuppelt, die aus einem einzigen im Durchmesser grösseren Lichtleitfaserstab besteht. Dieser leitet die Strahlungssignale zu einer hier nicht dargestellten Verarbeitungseinrichtung, die aus einem Strahlungsempfänger und Signalwandler mit anschliessender Verarbeitungslogik besteht. Der weitere Aufbau des Zündverteilers entspricht dem handelsüblicher.

Der Strahlungsempfänger und der Signalwandler kann ein Photovervielfacher oder eine andere, aus optoelektrischen Bauteilen aufgebaute Einrichtung sein.

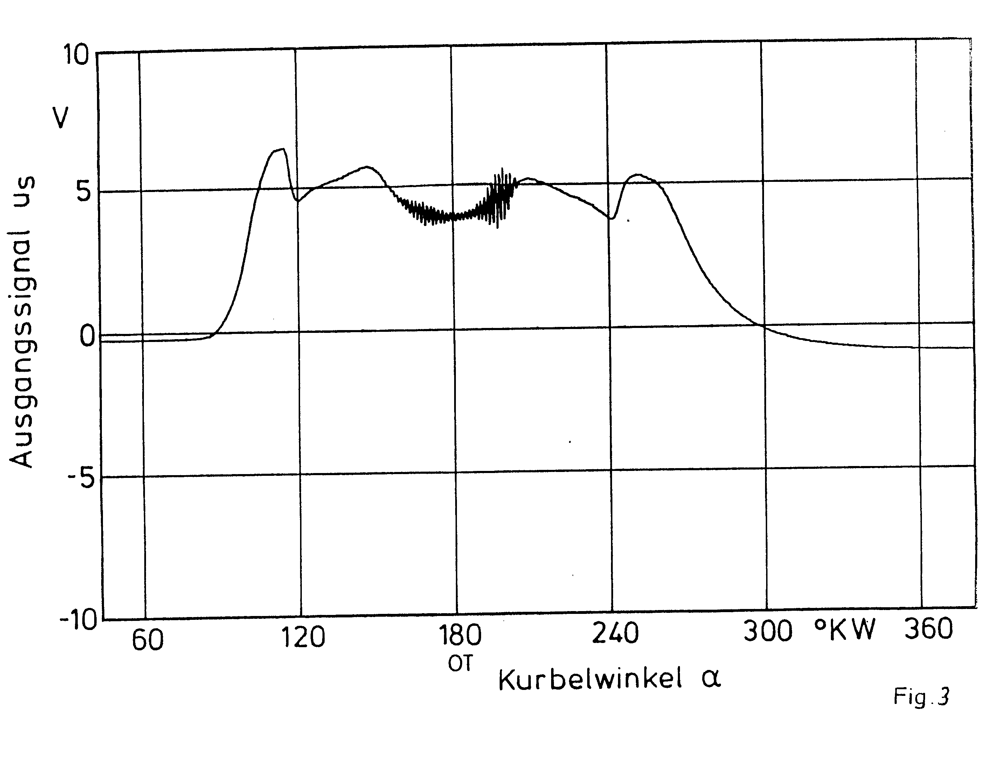

In Fig. 3 ist ein aus einem Photovervielfacher bei klopfendem Betrieb erzeugtes Ausgangssignal über dem Kurbelwinkel dargestellt. Wie man der Figur entnehmen kann, ist im Bereich des oberen Totpunktes, also im Bereich eines Kurbelwinkels von 180°, eine starke Schwankung des Ausgangssignals festzustellen. Dies bedeutet klopfenden Betrieb.

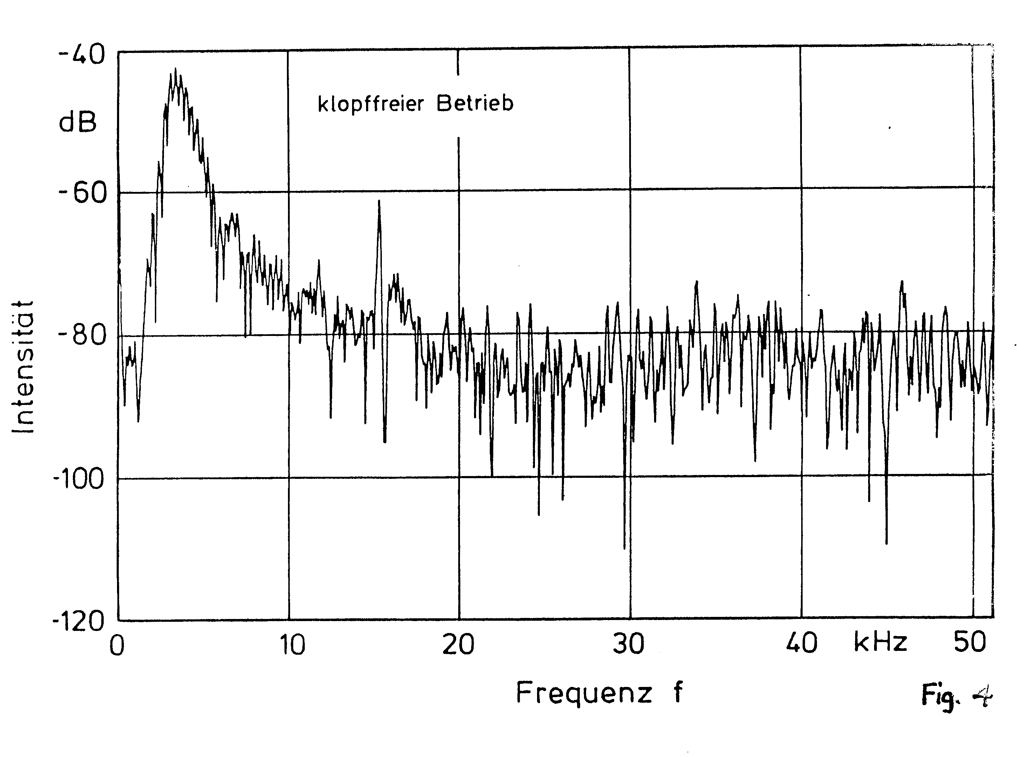

Werden Frequenzanalysen von dem Ausgangssignal aus dem Photovervielfacher vorgenommen, so erhält man für den nicht klopfenden Betrieb das in Fig. 4 dargestellte Frequenzspektrum.

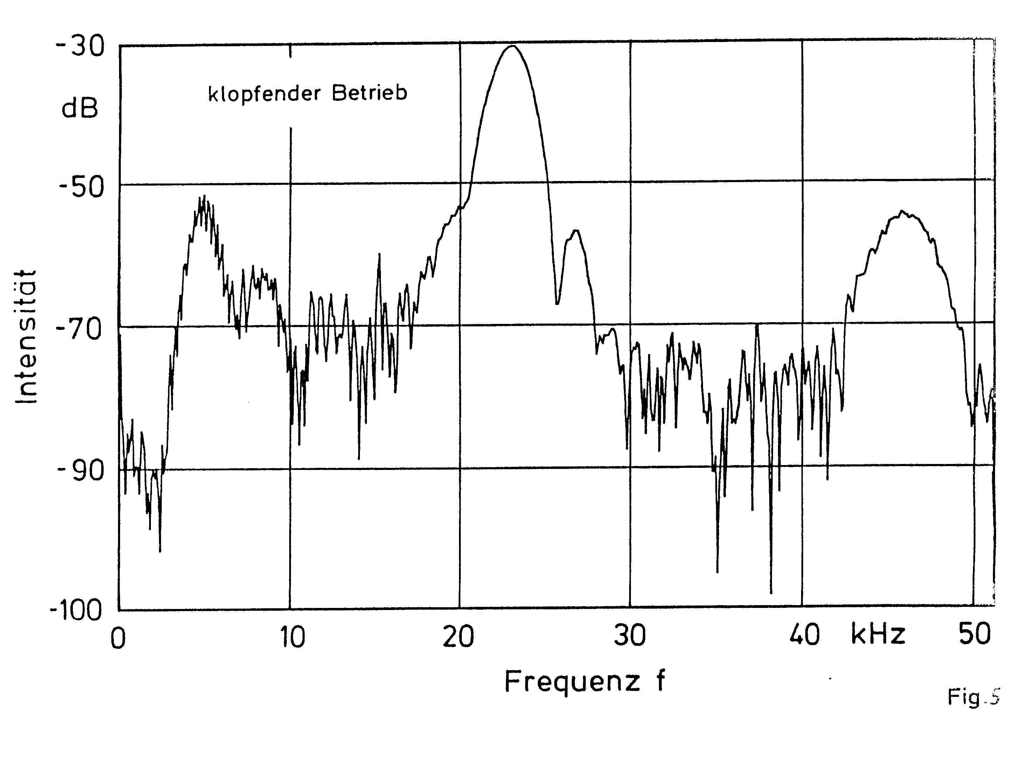

Für den klopfenden Betrieb zeigt Fig. 5 das Frequenzspektrum. Man erkennt deutlich, dass im Bereich von 23 kHz und 46 kHz starke Überhöhungen auftreten, die den klopfenden Betrieb signalisieren. Ebenfalls zeigt ein Vergleich von Fig. 4 mit Fig. 5 deutlich, dass der Signalrauschabstand etwa 50 dB beträgt.

Alle drei Diagramme wurden an einem AVL-Einzylindermotor (Anstalt für Verbrennungsmotor List) bei einer Drehzahl von 2000 U/min., einem Verdichtungsverhältnis

$\varepsilon = 9,08$ und einem Luftverhältnis $\lambda = 0,9$ ermittelt.

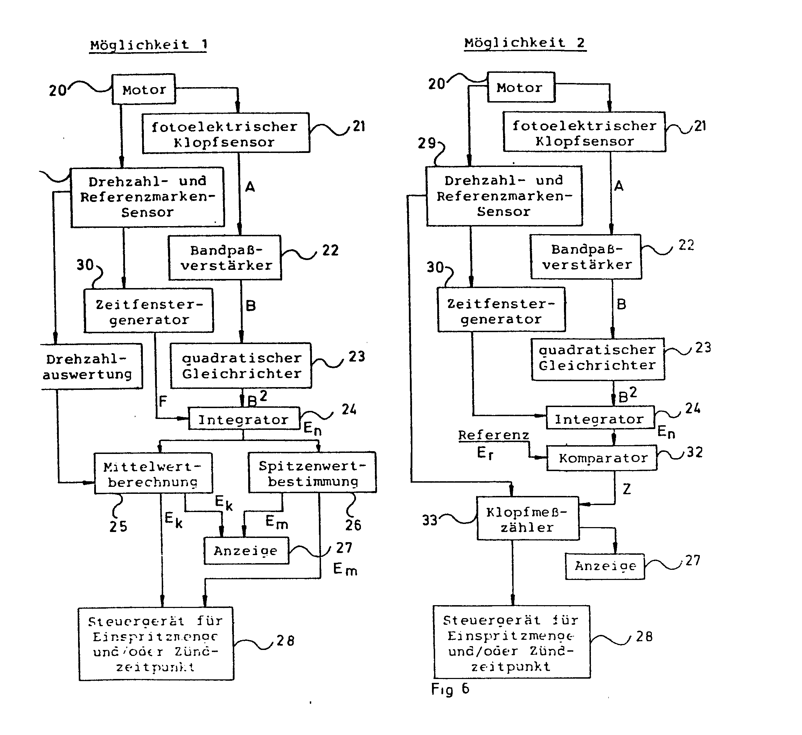

In Fig. 6 sind zwei Blockschaltbilder einer Verarbeitungslogik dargestellt, die aufzeigen, wie das erfindungsgemäss gelieferte Signal verarbeitet werden kann, um den klopffreien vom klopfenden Betrieb zu unterscheiden. Weiterhin lässt sich mit einer derart aufgebauten Verarbeitungslogik eine Bewertung des Klopfsignals dahingehend erreichen, dass Rückschlüsse auf die Intensität des Klopfens vorgenommen werden können, wodurch die Quantität der regelungstechnischen Eingriffe über ein Steuergerät für die Einspritzung und/ oder Gemischaufbereitung und/oder den Zündzeitpunkt und/oder des Ladedruckes abgeleitet werden kann.

Anhand der 1. Möglichkeit in Fig. 6 soll die Auswertung eines Signals erläutert werden. Hierzu ist am Motor (Block 20) einerseits der erfindungsgemässe Klopfsensor mit Strahlungsempfänger und Signalwandler (Block 21) und andererseits ein an sich bekannter Drehzahl- und Referenzmarkensensor (Block 29) angeordnet. Das vom Klopfsensor gelieferte und im Strahlungsempfänger und Signalwandler erzeugte Signal A wird über einen Bandpassverstärker (Block 22) geführt, der das Signal filtert und pegelmässig anpasst und das Ausgangssignal B liefert, anschliessend einem quadratischen Gleichrichter (Block 23) zuleitet, dessen Ausgang das Signal $B^2$ einem Integrator (Block 24) zuführt.

Wird das von dem Drehzahl- und Referenzmarkensensor gelieferte Signal in einem Zeitfenstergenerator (Block 30) aufbereitet und als Signal F ebenfalls dem Integrator zugeleitet, so ist es möglich, die Klopfsignalenergien $E_n$ innerhalb eines Kurbelwinkels oder Zeitfensters zu bestimmen. Die Klopfsignalenergien $E_n$ sind also eine auf einen Kurbelwinkel- oder bestimmten Zeitabschnitt bezogene Rechengrösse

$$E_n = \int_{t_1}^{t_2} B^2 dt \qquad (1)$$

Aus diesen Klopfsignalenergien $E_n$ werden dann zum einen ein Mittelwert $E_k$ (Block 25) unter Zuhilfenahme eines vom Drehzahl- und Referenzmarkensensor über eine Drehzahlauswertung (Block 31) gelieferten Signals ermittelt,

$$E_k = \frac{1}{N} \sum_{n=1}^{N} E_n \qquad (2)$$

wobei N die Anzahl der betrachteten Arbeitsspiele ist.

Weiterhin können die Klopfsignalenergien $E_n$ zur Spitzenwertbestimmung (Block 26) herangezogen werden.

$$E_m = \max_{n=1,N} E_n \qquad (3)$$

Beide Ergebnisse, sowohl der Mittelwert $E_k$ als auch der Spitzenwert $E_m$ liefern ein Kriterium dafür, ob und mit welcher Intensität klopfende Verbrennung vorliegt.

Eine Antiklopfregelung wäre jeweils dann notwendig, wenn der Mittelwert $E_k$ und/oder der Spitzenwert $E_m$ einen bestimmten oberen Schrankenwert überschreitet. Das Mass der Überschreitung liefert einen Anhaltspunkt für die Qualität der notwendigen regelungstechnischen Eingriffe.

Unterschreiten die beiden Kriterien zahlenmässig einen bestimmten unteren Schrankenwert und entspricht der augenblicklich vorliegende Betriebspunkt der Brennkraftmaschine nicht dem optimalen Sollwert, so kann eine Regelung in Richtung des optimalen Betriebspunkts durchgeführt werden.

Die zweite Möglichkeit der Auswertung der Klopfsignalenergien $E_n$ besteht darin, sie in einen Komparator (Block 32) zu leiten, der immer dann einen Zählimpuls Z als Ausgangssignal erzeugt, wenn die Klopfsignalenergien $E_n$ zahlenmässig über einem dem Komparator vorgegebenen Referenzwert $E_r$ liegen. Das Signal Z wird dann in einer Zähleinrichtung (Block 33) mit dem von dem Drehzahl- und Referenzmarkensensor 29 gelieferten Signal dazu benutzt, die relative Häufigkeit der klopfenden Zyklen zu ermitteln. Das vom Klopfmesszähler gelieferte Signal kann dann entweder angezeigt (Block 27) oder einem Steuergerät (Block 28) zur Änderung der Einspritzmenge und/ oder der Gemischaufbereitung und/oder für den Zündzeitpunkt und/oder für den Ladedruck als Steuerimpuls eingegeben werden.

Das Klopfsignal kann sowohl analog als auch digital verarbeitet werden. Weiterhin kann die aufgezeigte Verarbeitungslogik einzeln eingesetzt werden oder auch als Bestandteil eines an sich bekannten Schaltgeräts für die Steuerung der Gemischaufbereitung und/oder des Zündzeitpunkts und/oder des Ladedrucks.

Durch Bestimmung und Auswertung der Drehzahl und durch Kenntnis der Zündfolge können die Klopfsignalenergien $E_n$ einem bestimmten Motorzylinder zugeordnet werden. Somit ist es möglich, für jeden Zylinder getrennt Mittelwert $E_k$ und/oder Spitzenwert $E_m$ und/oder relative Häufigkeit $\varphi$ zu bestimmen. Dadurch kann jeder Zylinder individuell bewertet und geregelt werden, was einen optimalen Motorbetrieb gewährleistet.

**Patentansprüche**

1. Verfahren zum Erkennen klopfender Verbrennung während des Betriebes einer fremdgezündeten Brennkraftmaschine, in deren Brennraum die von den Brennraumgasen emittierte Strahlung optisch erfasst, von einem Wandler in ein elektrisches Signal umgewandelt und einer Verarbeitungseinrichtung zugeführt wird, um aus den erfassten Strahlungsanteilen eine klopfende Verbrennung zu erkennen, dadurch gekennzeichnet, dass für jedes Arbeitsspiel aus der erfassten emittierten Strahlung der Brennraumgase die Klopfsignalenergie $E_n$ der Brennkraftmaschine nach der Gleichung

$$E_n = \int_{t_1}^{t_2} B^2 dt$$

ermittelt wird, wobei $t_2 > t_1$ und $t_2 - t_1$ ein vorgebbares Zeitintervall angibt und B das elektrische Signal des Wandlers ist, dass aus den innerhalb einer vorgebbaren Arbeitsspielanzahl N auftretenden Klopfsignalenergien $E_n$ eine IST-Grösse als Mittelwert $E_k$ nach der Gleichung

$$E_k = \frac{1}{N} \sum_{n=1}^{N} E_n$$

und/oder ein Spitzenwert $E_m$ nach der Gleichung

$$E_m = \max_{n=1,N} E_n$$

ermittelt wird, wobei N die Anzahl der vorgegebenen Arbeitsspiele ist, und dass der IST-Wert $E_k$, $E_m$ mit einem vorgegebenen Referenzwert verglichen wird, und in Abhängigkeit von dem Ergebnis dieses Vergleichs die Steuerung eines oder mehrerer die klopfende Verbrennung verhindernder Einstellparameter wie Einspritzmenge, Gemischaufbereitung, Zündzeitpunkt und Ladedruck erfolgt und die Brennkraftmaschine in Richtung auf einen nicht klopfenden Betriebspunkt gesteuert wird.

2. Verfahren zum Erkennen klopfender Verbrennung während des Betriebes einer fremdgezündeten Brennkraftmaschine, in deren Brennraum die von den Brennraumgasen emittierte Strahlung optisch erfasst, von einem Wandler in ein elektrisches Signal umgewandelt und einer Verarbeitungseinrichtung zugeführt wird, un aus den erfassten Strahlungsanteilen eine klopfende Verbrennung zu erkennen, dadurch gekennzeichnet, dass für jedes Arbeitsspiel aus der erfassten emittierten Strahlung der Brennraumgase die Klopfsignalenergie $E_n$ der Brennkraftmaschine nach der Gleichung

$$E_n = \int_{t_1}^{t_2} B^2 dt$$

ermittelt wird, wobei $t_2 > t_1$ ist und $t_2 - t_1$ ein vorgebbares Zeitintervall angibt und B das elektrische Signal des Wandlers ist, dass die für jedes Arbeitssignal ermittelte Klopfsignalenergie $E_n$ mit einem vorgegebenen Referenzwert $E_r$ verglichen wird, dass bei Überschreiten des Referenzwertes $E_r$ ein Signal Z erzeugt wird, das in eine Zähleinrichtung eingezählt wird, deren Zählerstand bezogen auf die Gesamtzahl der angetasteten Arbeitsspiele eine IST-Grösse für die relative Häufigkeit $\psi$ der klopfenden Arbeitsspiele darstellt, und dass in Abhängigkeit der relativen Häufigkeit $\psi$ die Steuerung eines oder mehrerer die klopfende Verbrennung verhindernder Einstellparameter wie Einspritzmenge, Gemischaufbereitung, Zündpunkt, Ladedruck usw. erfolgt, um die Brennkraftmaschine in Richtung auf einen nicht klopfenden Betriebspunkt zu steuern.

3. Verfahren nach Anspruch 1 oder 2, dadurch gekennzeichnet, dass in jedem Zylinder die Strahlung erfasst und zu einer gemeinsamen Verarbeitungseinrichtung geleitet wird, in der in Abhängigkeit von der Zeitfolge der eingehenden Strahlungssignale eine für jeden Zylinder individuelle Bewertung vorgenommen wird.

4. Verfahren nach einem der Ansprüche 1 bis 3, dadurch gekennzeichnet, dass durch die Bestimmung und Auswertung der Drehzahl und Kenntnis der Zündfolge die Klopfsignalenergien $E_n$ einem bestimmten Zylinder zugeordnet werden, wodurch für jeden Zylinder getrennte IST-Grössen als Mass für klopfende Verbrennung bestimmt werden.

5. Vorrichtung zur Durchführung des Verfahrens nach Anspruch 1, mit einem im Brennraum einer fremdgezündeten Brennkraftmaschine in der Zündkerze (1) angeordneten optischen Sensor (8) zur Erfassung der von den Brennraumgasen emittierten Strahlung, dessen Signale einem optoelektrischen Wandler (21) zugeführt sind, der mit einer Verarbeitungseinrichtung verbunden ist, dadurch gekennzeichnet, dass die Verarbeitungseinrichtung einen an der Brennkraftmaschine angeordneten an sich bekannten Drehzahl- und Referenzmarkensensor (29) aufweist, der einen Zeitfenstergenerator (30) steuert, dessen Ausgang mit einem Eingang eines Integrators (24) verbunden ist, wobei das elektrische Signal des Wandlers (21) über einen Bandpassverstärker (22) geführt und einem quadratischen Gleichrichter (23) zugeführt ist, dessen Ausgang an dem anderen Eingang des Integrators (24) liegt, dessen Ausgangswert ($E_n$) einerseits einer Mittelwertberechnungsstufe (25) und andererseits einer Spitzenwertbestimmungsstufe (26) zugeführt ist, deren Ausgangssignale ($E_k$, $E_m$) einem Steuergerät (28) zugeführt sind, das bei Überschreiten eines vorgebbaren Bezugswertes mindestens einen Betriebsparameter der Brennkraftmaschine ändert.

6. Vorrichtung zur Durchführung des Verfahrens nach Anspruch 2 mit einem im Brennraum einer fremdzündenden Brennkraftmaschine in der Zündkerze (1) abgeordneten optischen Sensor (8) zur Erfassung der von den Brennraumgasen emittierten Strahlung, dessen Signale einem optoelektrischen Wandler (21) zugeführt sind, der mit einer Verarbeitungseinrichtung verbunden ist, dadurch gekennzeichnet, dass die Verarbeitungseinrichtung aus einem an der Brennkraftmaschine angeordneten, an sich bekannten Drehzahl- und Referenzmarkensensor (29) besteht, der einen Zeitfenstergenerator (30) ansteuert, dessen Ausgang mit dem Eingang eines Integrators (24) verbunden ist, wobei das elektrische Signal des Wandlers (21) über einen Bandpassverstärker (22) einem quadratischen Gleichrichter (23) zugeführt ist, dessen Ausgang auf dem anderen Eingang des Integrators (24) liegt, dessen Ausgangswert ($E_n$) einem Komperator (32) zugeführt ist, der den Ausgangswert ($E_n$) mit einem Referenzwert ($E_r$) vergleicht und bei Überschreiten des Referenzwertes ($E_r$) einen Klopfmesszähler (33) ansteuert, der vom Drehzahl- und Referenzmarkensensor (29) kontrolliert ist und sein Ausgangssignal an ein Steuergerät (28) zur Veränderung von mindestens einem Betriebsparameter der Brennkraftmaschine weitergibt.

7. Vorrichtung nach Anspruch 5 oder 6 für eine mehrzylindrige Brennkraftmaschine, bei dem jeder Zylinder einen Sensor aufweist, dadurch gekennzeichnet, dass die Ausgangssignale aller Sensoren in nur einer Verarbeitungseinrichtung verarbeitet sind.

**Claims**

1. A method for the recognition of knocking combustion during the operation of an internal combustion engine having external ignition, in the combustion chamber of which the radiation emitted by the combustion chamber gases is optically detected, converted by a transducer into an electrical signal and fed to a processing arrangement in order to recognise a knocking combustion from the detected radiation proportions, characterised in that, for each working cycle, the knocking signal energy $E_n$ of the internal combustion engine is ascertained from the detected emitted radiation of the combustion chamber gasses in accordance with the equation

$$E_n = \int_{t_1}^{t_2} B^2 dt$$

wherein $t_2 > t_1$ and $t_2-t_1$ indicates a predeterminable time interval and B is the electrical signal of the transducer; that from the knocking signal energies $E_n$ occurring within a predeterminable number N of working cycles, an actual value is ascertained as a mean value $E_k$ according to the equation

$$E_k = \frac{1}{N} \sum_{n=1}^{N} E_n$$

and/or a peak value $E_m$ is ascertained according to the equation

$$E_m = \max_{n=1,N} E_n$$

wherein N is the number of the predetermined working cycles; and that the actual value $E_k$, $E_m$ is compared with a predetermined reference value and, in dependence upon the result of this comparison, the control of one or more adjustment parameters preventing knocking combustion, such as injection quantity, mixture preparation, ignition timing and changing pressure takes place and the internal combustion engine is controlled in the direction towards a non-knocking working point.

2. A method for the recognition of knocking combustion during the operation of an internal combustion engine having external ignition, in the combustion chamber of which the radiation emitted by the combustion chamber gases is optically detected, converted by a transducer into an electrical signal and fed to a processing arrangement in order to detect a knocking combustion from the detected radiation proportions, characterised in that, for each working cycle, the knocking signal energy $E_n$ of the internal combustion engine is ascertained from the detected emitted radiation of the combustion chamber gases according to the equation

$$E_n = \int_{t_1}^{t_2} B^2 dt$$

wherein $t_2 > t_1$ and $t_2-t_1$ indicates a predeterminable time interval and B is the electrical signal of the transducer; that the knocking signal energy $E_n$ ascertained for each working signal is compared with a predetermined reference value $E_r$; that on the reference value $E_r$ being exceeded a signal Z is generated which is counted into a counting device the counter state of which, related to the total of the scanned working cycles, represents an actual value for the relative frequency $\psi$ of the knocking working cycles; and that, in dependence upon the relative frequency $\psi$, the control of one or more adjustment parameters preventing the knocking combustion, such as injection quantity, mixture preparation, ignition timing, charging pressure etc., takes place in order to control the internal combustion engine in the direction towards a non-knocking working point.

3. A method according to Claim 1 or 2, characterised in that the radiation in each cylinder is detected and conducted to a common processing arrangement wherein, in dependence upon the sequence of the entering radiation signals, an individual evaluation is effected for each cylinder.

4. A method according to any one of Claims 1 to 3, characterised in that, by the determination and evaluation of the rotation rate and knowledge of the ignition sequence, the knocking signal energies $E_n$ are allocated to one specific cylinder so that separate actual values are determined for each cylinder as a measure for knocking combustion.

5. Apparatus for carrying out the method according to Claim 1 having an optical sensor (8) arranged in the spark plug (1) in the combustion chamber of an internal combustion engine having external ignition for the detection of the radiation emitted by the combustion chamber gases, the signals of which sensor are fed to an opto-electric transducer (21) which is connected to a processing arrangement, characterised in that the processing arrangement comprises a rotation rate and reference mark sensor (29) known per se arranged on the internal combustion engine, which sensor controls a time-window generator (30) the output of which is connected to an input of an integrator (24), while the electrical signal of the transducer (21) is conducted by way of a band-pass amplifier (22) and is fed to a square-law rectifier (23) the output of which is connected to the other input of the integrator (24), the output value ($E_n$) of which is fed for the one part to a mean value calculation stage (25) and for the other part to a peak value determination stage (26), the output signals ($E_k$, $E_m$) of which are fed to a control appliance (28) which, on a predeterminable reference value being exceeded, varies at least one working parameter of the internal combustion engine.

6. Apparatus for carrying out the method according to Claim 2 having an optical sensor (8) arranged in the spark plug (1) in the combustion chamber of an internal combustion engine having external ignition for the detection of the radiation emitted by the combustion chamber gases, the signals of which sensor are fed to an opto-electric transducer (21) which is connected with a processing arrangement, characterised in that the processing arrangement comprises a rotation rate and reference mark sensor (29) known per se arranged on the internal combustion engine, which sensor actuates a time-window generator (30) the output of which is connected to the input of an integrator (24), while the electrical signal of the transducer (21) is fed by way of a band-pass amplifier (22) to a square-law rectifier (23) the output of which is connected to the other input of the integrator (24), the output value /$E_n$) of which is fed to a comparator (32) which compares the output value ($E_n$) with a reference value ($E_r$) and on the reference value ($E_r$) being exceeded actuates a knock-measuring counter (33) which is monitored by the rotation rate and reference mark sensor (29) and transmits its output signal to a control appliance (28) for the variation of at least one working parameter of the internal combustion engine.

7. Apparatus according to Claim 5 or 6 for a multi-cylinder internal combustion engine wherein each cylinder is provided with a sensor, characterised in that the output signals of all sensors are processed in only one processing arrangement.

**Revendications**

1. Procédé pour détecter une combustion s'accompagnant de cognement pendant le fonctionnement d'un moteur à combustion interne à allumage séparé, procédé dans lequel le rayonnement émis par les gaz de la chambre de combustion vers la chambre de combustion de ce moteur est détecté optiquement, converti par un convertisseur en un signal électrique, et appliqué à un dispositif de traitement, pour identifier, à partir des fractions de rayonnement ainsi détectées, une combustion donnant lieu à des cognements, procédé caractérisé en ce que pour chaque cycle de fonctionnement, l'énergie $E_n$ du signal de cognement du moteur à combustion interne, est déterminée à partir du rayonnement ainsi émis et détecté des gaz de la chambre de combustion selon l'égalité:

$$E_n = \int_{t_1}^{t_2} B^2 dt$$

dans laquelle $t_2 > t_1$ et $t_2 - t_1$ indiquent un intervalle de temps susceptible d'être prédéterminé, tandis que B est le signal électrique du convertisseur, de façon qu'à partir des énergies $E_n$ du signal de cognement survenant à l'intérieur d'un nombre susceptible d'être prédéfini de cycles de fonctionnement, une grandeur réelle en tant que valeur moyenne $E_k$ soit déterminée selon l'égalité:

$$E_k = \frac{1}{N} \sum_{n=1}^{N} E_n$$

et/ou une valeur de pointe $E_m$ selon l'égalité:

$$E_m = \max_{n=1,N} E_n$$

N étant le nombre des cycles de fonctionnement prédéfinis, et la valeur réelle $E_k$, $E_m$ étant comparée avec une valeur de référence prédéfinie, tandis qu'en fonction du résultat de cette comparaison, s'effectue la commande d'un ou plusieurs des paramètres de réglage empêchant la combustion donnant lieu à cognement, tels que la quantité injectée, l'élaboration du mélange, l'instant d'allumage, et la pression d'alimentation, le moteur à combustion interne étant commandé vers un point de fonctionnement ne donnant pas lieu à cognement.

2. Procédé pour identifier une combustion donnant lieu à cognement pendant le fonctionnement d'un moteur à combustion interne à allumage séparé, procédé dans lequel le rayonnement émis par les gaz de la chambre de combustion dans la chambre de combustion de ce moteur est détecté optiquement, et transformé par un convertisseur en un signal électrique et appliqué à un dispositif de traitement, pour identifier à partir des fractions de rayonnement ainsi détectées une combustion donnant lieu à cognement, procédé caractérisé en ce que pour chaque cycle de fonctionnement, l'énergie $E_n$ du signal de cognement du moteur à combustion interne est détectée à partir du rayonnement ainsi émis et détecté des gaz de la chambre de combustion selon l'égalité:

$$E_n = \int_{t_1}^{t_2} B^2 dt$$

dans laquelle on a $t_2 > t_1$ et $t_2 - t_1$ indiquant un intervalle de temps susceptible d'être prédéfini, tandis que B est le signal électrique du convertisseur, l'énergie $E_n$ du signal de cognement déterminé pour chaque cycle de fonctionnement étant comparé avec une valeur de référence prédéfinie $E_r$, un signal Z étant engendré en cas de dépassement de cette valeur de référence $E_r$, ce signal étant décompté dans un dispositif de comptage dont l'état de comptage rapporté au nombre total de cycles de fonctionnement explorés représente une valeur réelle pour la fréquence relative $\psi$ des cycles de fonctionnement donnant lieu à cognement, tandis qu'en fonction de cette fréquence relative $\psi$ est effectuée la commande d'un ou plusieurs paramètres de réglage empêchant une combustion donnant lieu à cognement, tels que la quantité injectée, l'élaboration du mélange, l'instant d'allumage, la pression d'alimentation, etc..., pour commander le moteur à combustion interne vers un point de fonctionnement ne donnant pas lieu à un cognement.

3. Procédé selon la revendication 1 ou 2, caractérisé en ce que dans chaque cylindre, le rayonnement est détecté et transmis à un dispositif commun de traitement, dans lequel en fonction de la succession dans le temps des signaux de rayonnement entrant, il est procédé à une évaluation individuelle pour chaque cylindre.

4. Procédé selon une des revendications 1 à 3, caractérisé en ce que, grâce à la détermination et à l'exploitation de la vitesse de rotation et à la connaissance de la succession d'allumage, les énergies $E_n$ des signaux de cognement sont associées à un cylindre déterminé, grâce à quoi, pour chaque cylindre, des grandeurs réelles distinctes sont déterminées pour servir de mesure de la combustion donnant lieu à cognement.

5. Dispositif pour la mise en œuvre du procédé selon la revendication 1, avec un détecteur optique (8) disposé dans la bougie d'allumage (1) dans la chambre de combustion d'un moteur à combustion interne à allumage séparé, pour détecter le rayonnement émis par les gaz de la chambre de combustion, détecteur dont les signaux sont appliqués à un convertisseur opto-électrique (21) qui est relié à un dispositif de traitement, dispositif caractérisé en ce que le dispositif de traitement comporte un détecteur de vitesse de rotation et de repère de référence (29) connu en soi et associé au moteur à combustion interne, qui commande un générateur de fenêtre ou de temps (30) dont la sortie est reliée à une entrée d'un intégrateur (24), le signal électrique du convertisseur (21) passant par un amplificateur passe-bande (22) et étant appliqué à un redresseur quadratique (23) dont la sortie est appliquée à l'autre entrée d'un intégrateur (24), dont la valeur de sortie ($E_n$) est appliquée, d'une part, à un étage de calcul de valeur moyenne (25) et, d'autre part, à un étage de détermination d'une valeur de pointe (26), dont les signaux de sortie ($E_k$, $E_m$) sont appliqués à un appareil de commande (28) qui, lors du dépassement d'une valeur de référence susceptible d'être prédéfinie, modifie au moins un paramètre de fonctionnement du moteur à combustion interne.

6. Dispositif pour la mise en œuvre du procédé selon la revendication 2 avec un détecteur optique (8) disposé dans la bougie d'allumage (1) dans la chambre de combustion d'un moteur à combustion interne à allumage séparé, pour détecter le rayonnement émis par les gaz de la chambre de combustion, détecteur dont les signaux sont appliqués à un convertisseur opto-électrique (21) qui est relié à un dispositif de traitement, dispositif caractérisé en ce que le dispositif de traitement est constitué d'un détecteur de vitesse de rotation et de repère de référence (29) connu en soi et disposé sur le moteur à combustion interne, ce détecteur commandant un générateur de fenêtre de temps (30) dont la sortie est reliée à l'entrée d'un intégrateur (24), le signal électrique du convertisseur (21) étant appliqué par l'intermédiaire d'un amplificateur passe-bande (22) à un redresseur quadratique (23) dont la sortie est appliquée à l'autre entrée d'un intégrateur (24) dont la valeur de sortie ($E_n$) est appliquée à un comparateur (32) qui compare la valeur de sortie ($E_n$) avec une valeur de référence ($E_r$) et qui, en cas de dépassement de la valeur de référence ($E_r$) commande un compteur de mesure de cognement (33) qui est contrôlé par le détecteur de vitesse de rotation et de repère de référence (29) et qui transmet son signal de sortie à un appareil de commande (28) pour modifier au moins un des paramètres de fonctionnement du moteur à combustion interne.

7. Dispositif selon la revendication 5 ou 6, pour un moteur à combustion interne multi-cylindres, dans lequel chaque cylindre comporte un détecteur, dispositif caractérisé en ce que les signaux de sortie de tous les détecteurs sont traités dans un seul dispositif de traitement.

Fig.1

Fig.2

Fig. 3

Fig. 4

Fig. 5

Möglichkeit 2

Motor — 20

fotoelektrischer Klopfsensor — 21

Drehzahl- und Referenzmarken-Sensor — 29

Bandpaß-verstärker — 22

Zeitfenster-generator — 30

quadratischer Gleichrichter — 23

Integrator — 24

$E_n$

Komparator — 32

Anzeige — 27

Klopfmeß-zähler — 33

Referenz $E_r$

A   B   $B^2$   Z

Steuergerät für Einspritzmenge und/oder Zünd-zeitpunkt — 28

Fig 6

Möglichkeit 1

Motor — 20

fotoelektrischer Klopfsensor — 21

Drehzahl- und Referenzmarken-Sensor

Bandpaß-verstärker — 22

Zeitfenster-generator — 30

Drehzahl-auswertung

quadratischer Gleichrichter — 23

Integrator — 24

$E_n$

Spitzenwert-bestimmung — 26

Mittelwert-berechnung — 25

Anzeige — 27

$E_m$

$E_k$

A   B   $B^2$   F

Steuergerät für Einspritzmenge und/oder Zünd-zeitpunkt — 28